# EUROPÄISCHE PATENTANMELDUNG

(11) **EP 2 574 428 A1**
(43) Veröffentlichungstag der Anmeldung: **03.04.2013**
(21) Anmeldenummer: 11405333.3
(22) Anmeldetag: 30.09.2011
(51) Int. Cl.: B25J 17/02

(54) **Parallelkinematischer Industrieroboter und Verfahren zur Steuerung dieses Industrieroboters**

(71) Anmelder: Güdel Group AG, 4900 Langenthal (CH)
(72) Erfinder: Nilsson, Adam, 22650 Lund (SE); Zulauf, Walter, 4937 Ursenbach (CH)
(74) Vertreter: Rüfenacht, Philipp Michael

(57) **Zusammenfassung**

Ein Industrieroboter zur Bewegung von einem oder mehreren Objekten im Raum umfasst einen Endeffektor (3) zum Halten des einen oder der mehreren Objekte. Der Endeffektor (3) ist mit einem ersten Arm (10.1) verbunden, welcher mindestens drei Verbindungen (53.1, 53.2, 53.3) aufweist, welche je an einem ersten Verbindungspunkt mit dem Endeffektor (3) verbunden sind und je an einem zweiten Verbindungspunkt mit einem ersten Verbindungsstück (52.1) verbunden sind. Der Endeffektor (3) ist ausserdem mit einem zweiten Arm (10.2) verbunden, welcher mindestens zwei Verbindungen (54.1, 54.2) aufweist, welche je an einem ersten Verbindungspunkt mit dem Endeffektor (3) verbunden sind und je an einem zweiten Verbindungspunkt mit einem zweiten Verbindungsstück (52.2) verbunden sind. Der Endeffektor (3) ist des Weiteren mit einem dritten Arm (10.3) verbunden, welcher eine Verbindung (55) aufweist, welche an einem Verbindungspunkt mit dem Endeffektor (3) verbunden ist und an einem zweiten Verbindungspunkt mit einem dritten Verbindungsstück (52.3) verbunden ist. Dabei sind die Verbindungen (53.1, 53.2, 53.3, 54.1, 54.2, 55) schwenkbar an den ersten und zweiten Verbindungspunkten gelagert und das erste Verbindungsstück (52.1) ist um mindestens eine erste Drehachse (103.1) und eine zweite Drehachse (103.2) drehbar und das zweite Verbindungsstück (52.2) ist um mindestens eine dritte Drehachse (103.3) drehbar.

## Beschreibung

### Technisches Gebiet

Die Erfindung betrifft einen Industrieroboter zur Bewegung von einem oder mehreren Objekten im Raum. Dieser Industrieroboter umfasst einen mit drei Armen verbundenen Endeffektor zum Halten des einen oder der mehreren Objekte. Ein erster Arm weist mindestens drei Verbindungen auf, welche je an einem ersten Verbindungspunkt mit dem Endeffektor verbunden sind und je an einem zweiten Verbindungspunkt mit einem ersten Verbindungsstück verbunden sind. Ein zweiter Arm weist mindestens zwei Verbindungen auf, welche je an einem ersten Verbindungspunkt mit dem Endeffektor verbunden sind und je an einem zweiten Verbindungspunkt mit einem zweiten Verbindungsstück verbunden sind. Ein dritter Arm weist eine Verbindung auf, welche an einem Verbindungspunkt mit dem Endeffektor verbunden ist und an einem zweiten Verbindungspunkt mit einem dritten Verbindungsstück verbunden ist. Die Verbindungen sind schwenkbar an den ersten und zweiten Verbindungspunkten gelagert.

### Stand der Technik

Industrieroboter zur Bewegung von einem oder mehreren Objekten im Raum sind bekannt. Auch sind Industrieroboter mit einer so genannten Parallelkinematik bekannt, bei welchen das eine oder die mehreren Objekte auf einem Endeffektor angebracht sind und mit diesem im Raum bewegt werden können. Bei solchen Robotern ist der Endeffektor mit mehreren Armen verbunden. Wenn diese Arme beweglich mit dem Endeffektor verbunden sind und nur Zugkräften und/oder kompressiven Kräften ausgesetzt werden sollen, werden mindestens sechs Arme benötigt, damit die Positionierung und die Orientierung des Endeffektors eindeutig definiert sind. Um dieses Ziel zu erreichen, ist es nebst der Verwendung von mindestens sechs individuellen Armen auch möglich, mehrere Arme zu einem einzigen Arm zusammenzufassen und somit Arme zu konstruieren, welche aus mehreren Verbindungen (d h. Armen, welche zu einem Arm kombiniert wurden) bestehen. Eine oft verwendete Konstruktion für entsprechende Industrieroboter ist, dass der Endeffektor mit drei Armen verbunden ist, welche zusammen mindestens sechs Verbindungen umfassen. Dabei kann das dem Endeffektor entgegen gesetzte Ende eines oder mehrerer der Arme je über eine Wegstrecke bewegbar sein. Zudem können einzelne oder alle Arme an beiden Enden schwenkbar gelagert sein und einzelne oder alle Verbindungen können iängenversiellbar ausgebildet sein.

US 6,974,297 B2 (ABB) beschreibt einen solchen Industrieroboter. Der erste Arm dieses Roboters weist mindestens drei Verbindungen zwischen dem Endeffektor und einem ersten Schlitten auf, welcher linear auf einer ersten Wegstrecke bewegbar ist. Die Verbindungspunkte von mindestens zwei der mindestens drei Verbindungen sind dabei mit dem ersten Schlitten parallel verschiebbar. Der zweite Arm weist zwei Verbindungen zwischen dem Endeffektor und einem zweiten Schlitten auf, welcher linear auf einer zweiten Wegstrecke, welche mit der ersten Wegstrecke zusammen in einer ersten Ebene liegt, bewegbar ist. Die Verbindungspunkte der Verbindungen mit dem zweiten Schlitten sind dabei parallel verschiebbar. Der dritte Arm besteht aus einer Verbindung zwischen dem Endeffektor und einem Antrieb. Die Verbindungen des ersten und des dritten Arms können auf beide Seiten der durch die erste und die zweite Wegstrecke aufgespannten Ebene bewegt werden. Es besteht ferner die Möglichkeit, den ersten Arm auf mindestens zwei Verbindungen zu reduzieren und die Verbindungspunkte aller Verbindungen mit der Plattform auf einer Linie anzubringen.

Dieser Roboter ist darauf ausgelegt, dass der Endeffektor in den drei translatorischen Freiheitsgraden bewegbar sowie um eine einzige Rotationsachse kippbar ist.

US 7,300,240 B2 (ABB) beschreibt ebenfalls einen solchen Industrieroboter. Der erste Arm weist zwei nicht-parallele Verbindungen zwischen dem Endeffektor und einem ersten Schlitten auf, welcher linear auf einer ersten Wegstrecke bewegbar ist. Der zweite Arm weist zwei Verbindungen zwischen dem Endeffektor und einem zweiten Schlitten auf, welcher linear auf einer zweiten Wegstrecke bewegbar ist. Der dritte Arm weist mindestens eine längenverstellbare Verbindung mit dem Endeffektor auf, welche über einen Antrieb verfügt. Der erste und der zweite Arm sind je um eine Achse schwenkbar, welche senkrecht zu einer ersten, durch die erste und die zweite Wegstrecke definierten Ebene liegt. Der Endeffektor ist auf beide Seiten einer zweiten Ebene schwenkbar, welche senkrecht zur ersten Ebene liegt und durch den ersten und den zweiten Schlitten führt. Der Endeffektor besitzt dadurch vier Freiheitsgrade, nämlich drei translatorische Freiheitsgrade und eine Kippachse.

US 2007/0255453 A1 (ABB) beschreibt ebenfalls einen solchen Industrieroboter mit einem Endeffektor und drei Armen. Der erste Arm weist drei Verbindungen zwischen dem Endeffektor und einem ersten Antrieb zur Beeinflussung des Endeffektors auf. Der zweite Arm weist zwei Verbindungen zwischen dem Endeffektor und einem zweiten Antrieb zur Beeinflussung des Endeffektors auf. Der dritte Arm weist eine Verbindung zum Endeffektor auf. Mindestens eine der sechs Verbindungen ist längenverstellbar. Es besteht die Möglichkeit, dass der dritte Arm auf einem dritten Schlitten montiert ist, welcher entlang einer dritten Wegstrecke bewegbar ist. Ausserdem besteht die Möglichkeit, dass der erste und der zweite Arm je auf einem linear fahrbaren Schlitten montiert sind und die dritte Wegstrecke auf einem dieser beiden Schlitten montiert ist, wobei die Verbindung des dritten Arms nicht längenverstellbar zu sein braucht.

Dieser Roboter kann so ausgeführt sein, dass der Endeffektor fünf oder sechs Freiheitsgrade besitzt. Dann ist auch bei einer Montage der dritten Wegstrecke auf den ersten oder zweiten Schlitten mindestens eine der sechs Verbindungen längenverstellbar.

Industrieroboter der oben beschriebenen Art haben grundsätzlich den Vorteil, dass sie eine grosse Stabilität bei einer verhältnismässig leichten Bauweise erreichen. Die bekannten Ausführungen solcher Roboter besitzen jedoch auch grosse Nachteile. Bei einer Ausführung nach US 6,974,297 B2 oder US 7,300,240 B2 ist beispielsweise die Anzahl der Freiheitsgrade des Endeffektors auf die drei translatorischen Freiheitsgrade sowie auf die Verkippung um eine einzelne Drehachse beschränkt. Dieser Nachteil kann durch eine Ausführung nach US 2007/0255453 A1 behoben werden, indem mindestens eine der Verbindungen längenverstellbar ist. Eine solche längenverstellbare Verbindung kann jedoch nur dann eine hohe Stabilität gewährleisten, wenn sie auch deutlich massiver als eine starre Verbindung gebaut ist. Dies bedeutet eine massivere Bauweise und somit eine unerwünschte Gewichtszunahme des Roboters. Zudem erfordert eine solche Ausführung auch einen erhöhten Rechenaufwand für eine Steuerung des Roboters, da sich die Distanz zwischen den Verbindungspunkten der längenverstellbaren Verbindungen ändert.

### Darstellung der Erfindung

Aufgabe der Erfindung ist es, einen dem eingangs genannten technischen Gebiet zugehörenden Industrieroboter zu schaffen, welcher bei leichter Bauweise auf einfache Art und Weise eine Positionierung sowie Orientierung des Endeffektors im Raum mittels Verkippung um mindestens zwei senkrecht zueinander liegende Drehachsen erlaubt, wobei eine hohe Stabilität und Steifigkeit des Endeffektors gewährleistet sein soll.

Die Lösung der Aufgabe ist durch die Merkmale des Anspruchs 1 definiert. Gemäss der Erfindung ist das erste Verbindungsstück um mindestens eine erste Drehachse und eine zweite Drehachse drehbar und das zweite Verbindungsstück ist um mindestens eine dritte Drehachse drehbar.

Durch die Drehung der beiden Verbindungsstücke um die genannten Drehachsen können die einzelnen Verbindungen des jeweiligen Arms relativ zueinander verschoben werden.

Dies erlaubt eine Verkippung des Endeffektors in alle Richtungen. Die gewünschte Positionierung des Endeffektors kann dabei auf bekannte Weise erreicht werden, indem entweder die Verbindungsstücke über entsprechende Wegstrecken bewegt werden und/oder indem die Längen der Verbindungen der einzelnen Arme variiert werden.

Ein Vorteil dieser Lösung ist, dass auf einfache Art und Weise die Orientierung sowie Positionierung des Endeffektors ermöglicht wird. Ein weiterer Vorteil ist, dass ein erfindungsgemässer Industrieroboter bei gleichzeitig leichter Bauweise sehr stabil ist und auch über eine grosse Steifigkeit gegenüber Vibrationen und anderen rückwirkenden Kräften verfügt, welche bei industriellen Anwendungen auftreten können, wenn Werkzeuge wie beispielsweise Bohrer oder Schleifköpfe am Endeffektor angebracht sind. Die leichte Bauweise ermöglicht einen dynamischen Betrieb des Roboters und damit eine hohe Arbeitsgeschwindigkeit. Ein weiterer Vorteil ist, dass die Drehung der Verbindungsstücke um die erwähnten Achsen technisch einfach zu verwirklichen ist. Dies erlaubt eine kostengünstige Herstellung eines erfindungsgemässen Industrieroboters. Zudem ist dadurch die Steuerung des Roboters verhältnismässig einfach und benötigt wenig Rechenaufwand, was einerseits für die Entwicklung der Steuerungslogik kostensenkend ist und andererseits die benötigte Rechenleistung reduziert.

Vorzugsweise liegt die erste Drehachse parallel zur dritten Drehachse. Dadurch haben Drehungen der Verbindungsstücke um diese Drehachsen eine ähnliche Wirkung auf den Endeffektor. Dies hat den Vorteil, dass die Steuerung des Roboters vereinfacht wird. Als Alternative besteht jedoch auch die Möglichkeit, die erste und die dritte Drehachse anders anzuordnen, so dass beide Drehachsen in einem Winkel zueinander stehen.

Vorteilhafter Weise steht die erste Drehachse senkrecht zur zweiten Drehachse. Dies hat den Vorteil, dass das erste Verbindungsstück in zwei senkrecht zueinander stehenden Ebenen gedreht werden kann. Dadurch wird die Steuerung des Endeffektors vereinfacht. Als Alternative zur senkrechten Anordnung der ersten und der zweiten Drehachse kann jedoch auch ein kleinerer Zwischenwinkel gewählt werden. Dies kann besonders in Situationen vorteilhaft sein, wenn die Platzverhältnisse oder andere Begebenheiten eine solche Anordnung erfordern.

Vorzugsweise sind sowohl die ersten Verbindungspunkte als auch die zweiten Verbindungspunkte der mindestens drei Verbindungen des ersten Arms je in einer Ebene und nicht je auf einer Linie angeordnet. Dadurch wird die Ausrichtung des Endeffektors relativ zur Ausrichtung der Ebene der zweiten Verbindungspunkte der mindestens drei Verbindungen mit dem ersten Verbindungsstück definiert. Dies ist vorteilhaft für die Orientierung des Endeffektors und für die Steifigkeit des Roboters.

Vorzugsweise sind die mindestens drei Verbindungen des ersten Arms gleich lang. Dies führt zusammen mit der vorteilhaften Anordnung der ersten und zweiten Verbindungspunkte dieser Verbindungen je in einer Ebene dazu, dass die Ebene mit den ersten Verbindungspunkten parallel zur Ebene mit den zweiten Verbindungspunkten steht. Dies vereinfacht die Steuerung des Roboters. Alternativ dazu können die mindestens drei Verbindungen des ersten Arms jedoch auch ungleich lang sein.

Vorteilhafterweise sind im Falle, dass der zweite Arm drei oder mehr Verbindungen aufweist, die ersten Verbindungspunkte und die zweiten Verbindungspunkte der Verbindungen des zweiten Arms je auf einer Linie angeordnet. Dies hat den Vorteil, dass die Beeinflussung des Endeffektors mit dem zweiten Verbindungsstück vereinfacht wird und somit auch die Steuerung des Roboters vereinfacht wird.

Vorzugsweise sind die mindestens zwei Verbindungen des zweiten Arms gleich lang. Dies führt dazu, dass die Beeinflussung des Endeffektors auch bei nicht parallelen Verbindungen verhältnismässig übersichtlich bleibt und die Steuerung des Roboters verhältnismässig einfach ist. Alternativ dazu können die mindestens zwei Verbindungen des zweiten Arms auch unterschiedliche Längen aufweisen. Dies kann je nach Vorgaben an den für den Roboter zur Verfügung stehenden Raum, an den mit dem Endeffektor zu erreichenden Raum sowie an die mit dem Endeffektor zu erreichenden Orientierungen ebenfalls vorteilhaft sein.

Vorzugsweise sind die Verbindungen des ersten Arms gleich lang wie die Verbindungen des zweiten Arms und die Verbindung des dritten Arms. Dies hat den Vorteil, dass die Steuerung des Roboters einfacher wird und die Produktion des Roboters somit kostengünstiger ist. Alternativ dazu können auch nur die Verbindungen zweier der drei Arme gleich lang sein. Als weitere Alternative besteht aber auch die Möglichkeit, dass die Verbindungen der drei Arme alle unterschiedlich lang sind.

Vorzugsweise besitzt der erste Arm genau drei erste Verbindungen, der zweite Arm genau zwei zweite Verbindungen und der dritte Arm genau eine dritte Verbindung. Dies hat den Vorteil, dass die Konstruktion des Roboters einfach ist und trotzdem die erforderliche Stabilität des Endeffektors gewährleistet. Konsequenterweise ist dadurch die Produktion des Roboters kostengünstiger. Alternativ dazu können die drei Arme aber auch mehr als die drei, zwei, bzw. eine Verbindung aufweisen.

Vorteilhafterweise sind eine Drehung des ersten Verbindungsstücks um die erste Drehachse, eine Drehung des ersten Verbindungsstücks um die zweite Drehachse und eine Drehung des zweiten Verbindungsstücks um die dritte Drehachse je von einem Spindelantrieb antreibbar. Dadurch wird auf kostengünstige Art und Weise eine präzis steuerbare und stabil abgestützte Drehung des ersten Verbindungsstücks um die erste und zweite Drehachse und des zweiten Verbindungsstücks um die dritte Drehachse ermöglicht. Zudem ist nach einer entsprechenden Drehung sowohl das erste als auch das zweite Verbindungsstück präzis positionierbar.

Vorzugsweise liegen die zweiten Verbindungspunkte von mindestens zwei der mindestens drei Verbindungen des ersten Arms auf der zweiten Drehachse. Dadurch wird die Anzahl der durch eine Drehung des ersten Verbindungsstücks um die zweite Drehachse bewegten Verbindungen minimiert. Dies hat den Vorteil, dass die Steuerung des Roboters vereinfacht wird.

Vorteilsweise ist die Distanz zwischen den ersten Verbindungspunkten der mindestens zwei Verbindungen des ersten Arms, deren zweite Verbindungspunkte auf der zweiten Drehachse liegen, gleich gross wie die Distanz zwischen den ersten Verbindungspunkten der Verbindungen des zweiten Arms. Dies hat den Vorteil, dass die entsprechenden Verbindungspunkte symmetrisch am Endeffektor angebracht werden können. Dadurch wird die Fertigung des Endeffektors vereinfacht. Alternativ dazu können die Distanzen der entsprechenden Verbindungspunkte am Endeffektor aber auch unterschiedlich gewählt werden.

Vorzugsweise ist die Distanz zwischen den zweiten Verbindungspunkten der mindestens zwei Verbindungen des ersten Arms, deren zweite Verbindungspunkte auf der zweiten Drehachse liegen, gleich gross wie die Distanz zwischen den zweiten Verbindungspunkten der mindestens zwei Verbindungen des zweiten Arms. In Kombination mit den im vorhergehenden Abschnitt beschriebenen vorteilhaften Distanzen der Verbindungspunkte derselben Verbindungen beim Endeffektor hat diese Anordnung den Vorteil, dass die

Auswirkung einer Drehung des ersten Verbindungsstücks um die erste Drehachse auf den Endeffektor sehr ähnlich ist wie die Auswirkung einer Drehung des zweiten Verbindungsstückes um die dritte Drehachse. Diese Ähnlichkeit macht die Steuerung des Endeffektors übersichtlicher und verringert den für die Steuerung benötigten Berechnungsaufwand. Dadurch werden die Kosten eines erfindungsgemässen Industrieroboters gesenkt. Durch die Wahl gleicher Abstände wird zudem eine weitgehend winkelunabhängige Steifigkeit der Lagerung des Endeffektors erreicht.

Als Alternative kann die Distanz zwischen den zweiten Verbindungspunkten der mindestens zwei Verbindungen des ersten Arms, deren zweite Verbindungspunkte auf der zweiten Drehachse liegen, anders als die Distanz zwischen den zweiten Verbindungspunkten der mindestens zwei Verbindungen des zweiten Arms gewählt werden.

Alternativ dazu kann die zweite Drehachse auch anders gewählt werden. Sie kann beispielsweise nur durch den zweiten Verbindungspunkt einer einzigen Verbindung führen. Sie kann aber auch durch gar keinen zweiten Verbindungspunkt führen. Eine dieser alternativen Ausführungen kann je nach Vorgaben an die Bewegungsabläufe des Endeffektors ebenfalls von Vorteil sein.

Vorteilsweise ist das erste Verbindungsstück auf einer ersten Wegstrecke bewegbar, das zweite Verbindungsstück auf einer zweiten Wegstrecke bewegbar und das dritte Verbindungsstück auf einer dritten Wegstrecke bewegbar. Dies hat den Vorteil, dass die Position des Endeffektors auf einfache Art und Weise eingestellt werden kann.

Alternativ zur Bewegbarkeit der Verbindungsstücke auf Wegstrecken können auch die Längen der Verbindungen des jeweiligen Arms synchron variiert werden oder das Verbindungsstück oder der Endeffektor kann in Richtung der Verbindungen in der Länge variiert werden. Je nach Platzverhältnissen kann eine solche Ausführung ebenfalls vorteilhaft sein.

Vorzugsweise sind die erste Wegstrecke, die zweite Wegstrecke und die dritte Wegstrecke Geraden. Dies hat den Vorteil, dass der Antrieb der Bewegung der Verbindungsstücke entlang der Wegstrecken technisch einfach umzusetzen ist und die Steuerung des Roboters vereinfacht wird. Dadurch werden auch die Kosten der Produktion des Roboters gering gehalten. Zudem lassen sich lineare Führungen für die Verbindungsstücke mit einer hohen Steifigkeit und Positionsgenauigkeit ausbilden.

Alternativ dazu können auch eine oder mehrere der Wegstrecken nicht Geraden sein. Je nach Rahmenbedingungen für die Montage und den Betrieb des Roboters kann dies vorteilhaft sein.

Vorzugweise liegen die erste Wegstrecke, die zweite Wegstrecke und die dritte Wegstrecke parallel zueinander. Dies reduziert den für die Steuerung des Roboters benötigten Rechenaufwand. Dadurch kann der Roboter kostengünstiger produziert werden.

Alternativ dazu können bloss zwei der drei Wegstrecken oder gar keine der drei Wegstrecken parallel liegen.

Vorteilsweise steht die erste Drehachse senkrecht zur ersten Wegstrecke. Dies hat besonders aufgrund der vorzugsweise parallelen Anordnung der drei Wegstrecken den Vorteil, dass durch eine Drehung des ersten Verbindungsstücks der Endeffektor in einer Ebene gekippt wird, welche senkrecht zu den drei Wegstrecken liegt. Dabei kann für einen bestimmten Drehwinkel des ersten Verbindungsstücks die grösstmögliche Einwirkung auf den Endeffektor erzielt werden.

Eine mögliche Alternative dazu ist, dass die erste Drehachse in einem spitzeren Winkel zur ersten Wegstrecke steht. Dies kann je nach Konstruktion des Roboters ebenfalls vorteilhaft sein.

Vorzugsweise steht die dritte Drehachse senkrecht zur zweiten Wegstrecke. Analog zur ersten Drehachse, welche vorzugsweise senkrecht zur ersten Wegstrecke steht, ist diese Anordnung vorteilhaft für eine optimale Beeinflussung des Endeffektors.

Es besteht die Alternative, die dritte Drehachse in einem spitzeren Winkel zur zweiten Wegstrecke anzuordnen.

Vorteilsweise wird der Endeffektor durch Drehen des ersten Verbindungsstücks um die zweite Drehachse seitwärts in einer ersten Richtung gekippt. Dies hat den Vorteil, dass die Steuerung des Roboters einfach gehalten wird.

Mit Vorteil wird der Endeffektor durch synchron gleichseitiges Drehen des ersten Verbindungsstücks um die erste Drehachse und des zweiten Verbindungsstücks um die dritte Drehachse in einer zweiten Richtung seitwärts gekippt.

Vorteilhafterweise sind die erste und die zweite Richtung unterschiedlich. Durch eine synchron gleichseitige Drehung des ersten Verbindungsstücks um die erste Drehachse und des zweiten Verbindungsstücks um die dritte Drehachse und durch die Drehung des ersten Verbindungsstücks um die zweite Drehachse kann der Endeffektor somit in zwei unterschiedliche Richtungen gekippt werden, wodurch der Endeffektor zwei rotative Freiheitsgrade erhält.

Bei einer weiteren bevorzugten Ausführungsform wird der Endeffektor durch nicht synchron gleichseitiges Drehen des ersten Verbindungsstücks um die erste Drehachse und des zweiten Verbindungsstücks um die dritte Drehachse sowohl in der zweiten Richtung seitwärts gekippt als auch in einer dritten Richtung gedreht, wobei es sich bei der dritten Richtung um eine Normale zu einer Oberfläche des Endeffektors handelt. Dies hat den Vorteil, dass der Endeffektor mit drei rotativen Freiheitsgraden bewegt werden kann.

Vorzugsweise wird der Endeffektor durch Verschieben des ersten Verbindungsstücks entlang der ersten Wegstrecke, des zweiten Verbindungsstücks entlang der zweiten Wegstrecke und des dritten Verbindungsstücks entlang der dritten Wegstrecke im Raum positioniert. Dies hat den Vorteil, dass der Endeffektor mit drei einfachen Linearantrieben im Raum bewegt werden kann. Zudem besitzt der Endeffektor dadurch je nach Steuerungsverfahren fünf oder sechs Freiheitsgrade.

Alternativ oder zusätzlich zur Bewegung der drei Verbindungsstücke entlang der entsprechenden Wegstrecken können auch die Verbindungen längenverstellbar ausgebildet sein, um den Endeffektor im Raum zu bewegen. Dabei ist es nicht nötig, dass alle Verbindungen individuell längenverstellbar sind, sondern es reicht aus, wenn die Verbindungsstücke, welche zu einem Arm gehören, synchron längenverstellbar sind. Eine weitere Alternative ist daher, eine Längenverstellbarkeit entlang der Ausrichtung der Verbindungen entweder in die Verbindungsstücke oder in den Endeffektor einzubauen, wobei die Endteile der Verbindungsstücke, welche nicht mit den Verbindungen verbunden sind, fest verankert sind. Diese Konstruktionsweise kann bei gewissen Platzvorgaben vorteilhaft sein.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine Schrägansicht des Industrieroboters,
- Fig. 2: eine Ansicht des Industrieroboters von unten,
- Fig. 3a, b eine: Detailansicht des ersten Schlittens sowie eine Detailansicht des zweiten Schlittens und
- Fig. 4: eine Detailansicht des Endeffektors von der Seite, auf welcher die drei Arme angebracht sind.

Grundsätzlich sind in den Figuren gleiche Teile mit gleichen Bezugszeichen versehen.

### Wege zur Ausführung der Erfindung

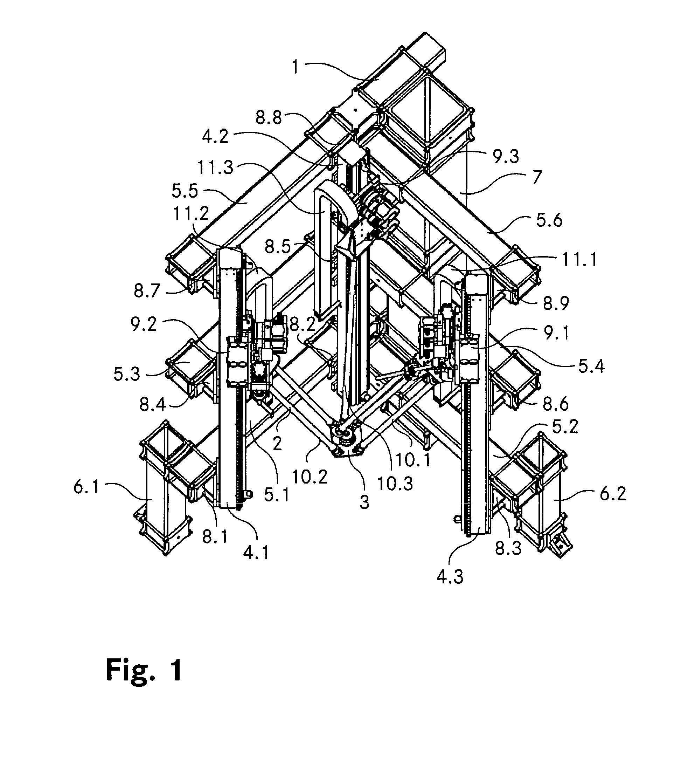

Figur 1 zeigt eine Schrägansicht eines Industrieroboters, welcher eine Trägervorrichtung 1 und eine bewegbare Vorrichtung 2 umfasst, wobei die bewegbare Vorrichtung 2 einen Endeffektor 3 trägt. Der Industrieroboter ist beispielsweise für die Bearbeitung von Werkstücken mittels eines am Endeffektor angebrachten Bohrkopfs geeignet. Die Trägervorrichtung 1 besteht aus drei vertikalen Balken 4.1, 4.2, 4.3, sechs horizontalen Balken 5.1, 5.2, 5.3, 5.4, 5.5, 5.6, zwei Sockelelementen 6.1, 6.2, sowie einer Stütze 7. Alle diese Elemente der Trägervorrichtung 1 besitzen einen quadratischen Querschnitt. Die sechs horizontalen Balken 5.1, 5.2, 5.3, 5.4, 5.5, 5.6, zwei Sockelelemente 6.1, 6.2, sowie die Stütze 7 mit tragender Funktion sind innen hohl und gegen beide Enden hin offen. Die Stütze 7 hat im Querschnitt doppelt so breite Seitenflächen wie die sechs horizontalen Balken 5.1, 5.2, 5.3, 5.4, 5.5, 5.6 und die beiden Sockelelemente 6.1, 6.2.

Die Trägervorrichtung 1 ist folgendermassen aufgebaut: Ein erster vertikaler Balken 4.1 ist an seinem unteren Ende über ein erstes Adapterstück 8.1 mit einem ersten Ende eines ersten horizontalen Balkens 5.1 verbunden. Dieses erste Adapterstück 8.1 ist an einer ersten längsseitigen Fläche des ersten vertikalen Balkens 4.1 und an einer vertikal ausgerichteten, ersten längsseitigen Fläche des ersten horizontalen Balkens 5.1 angebracht. Diese beiden Flächen stehen in einer horizontalen Ebene in einem Winkel von 45° zueinander, welcher zum ersten Ende des ersten horizontalen Balkens 5.1 hin geöffnet ist. Zwischen einem zweiten Ende und einer Mitte des ersten horizontalen Balkens 5.1 ist ein zweiter vertikaler Balken 4.2 an seinem unteren Ende über ein zweites Adapterstück 8.2 mit dem ersten horizontalen Balken 5.1 verbunden. Das zweite Adapterstück 8.2 ist an der ersten längsseitigen Fläche des ersten horizontalen Balkens 5.1 und an einer ersten längsseitigen Fläche des zweiten vertikalen Balkens 4.2 angebracht. Beide Flächen stehen parallel zueinander. Auf der vom ersten Ende des ersten horizontalen Balkens 5.1 abgewandten Seite des zweiten Adapterstücks 8.2 ist ein zweiter horizontaler Balken 5.2 befestigt, welcher rechtwinklig zum ersten horizontalen Balken 5.1 orientiert ist und in derselben Höhe verläuft. Die Verbindung zwischen dem ersten horizontalen Balken 5.1 und dem zweiten horizontalen Balken 5.2 befindet sich auf der unteren längsseitigen Fläche des ersten horizontalen Balkens 5.1 und auf der oberen längsseitigen Fläche des zweiten horizontalen Balkens 5.2, wobei sie sich am zweiten horizontalen Balken 5.2 an einem ersten Ende befindet. Der zweite horizontale Balken 5.2 zeigt auf die gleiche Seite des ersten horizontalen Balkens 5.1 wie die erste längsseitige Fläche des ersten horizontalen Balkens 5.1, an welcher auch das erste und das zweite Adapterstück 8.1, 8.2 mit dem ersten und dem zweiten vertikalen Balken 4.1, 4.2 angebracht sind.

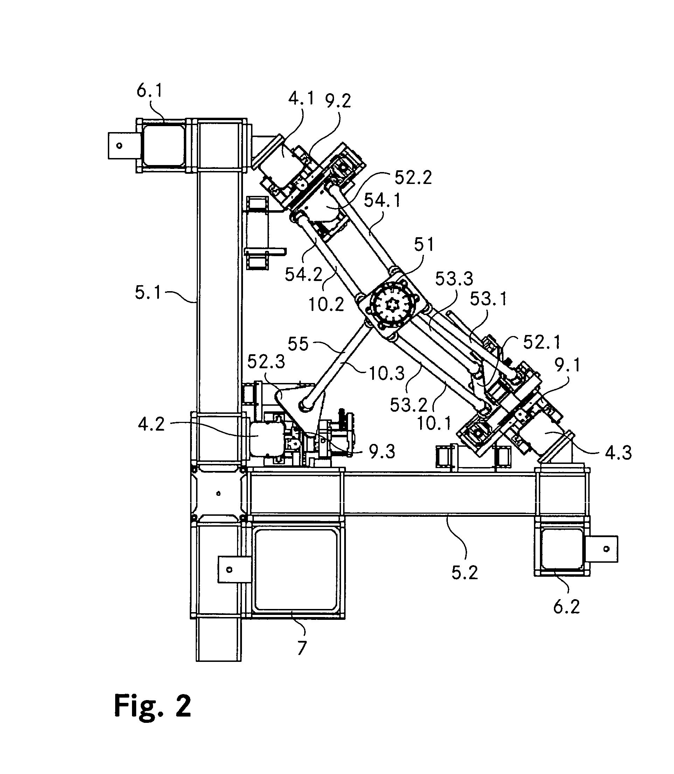

Von unten oder oben betrachtet (siehe Figur 2 für eine Unteransicht) handelt es sich bei der Verbindung zwischen dem ersten und dem zweiten horizontalen Balken 5.1, 5.2 um eine T-förmige Verbindung. Im einen Knie dieser T-förmigen Verbindung befindet sich wie im vorhergehenden Abschnitt beschrieben der zweite vertikale Balken 4.2. Im anderen Knie dieser T-förmigen Verbindung befindet sich Stütze 7, welche aufrecht ausgerichtet ist.

Die Stütze 7 ist dabei mit einer ersten längsseitigen Fläche an der ersten längsseitigen Fläche des ersten horizontalen Balkens 5.1 und mit einer zweiten längsseitigen Fläche an einer vertikal ausgerichteten, zweiten Fläche des zweiten horizontalen Balkens 5.2 befestigt. Diese zweite längsseitige Fläche des zweiten horizontalen Balkens 5.2 ist vom ersten Ende des ersten horizontalen Balkens 5.1 abgewandt und dem zweiten Ende des ersten horizontalen Balkens 5.1 zugewandt. Die erste und die zweite längsseitige Fläche der Stütze 7 liegen rechtwinklig zueinander. Das zweite Ende des ersten horizontalen Balkens 5.1 liegt nicht bündig auf einer Kante der ersten längsseitigen Fläche der Stütze 7, da der erste horizontale Balken 5.1 die erste längsseitige Fläche der Stütze 7 leicht überragt.

An einem zweiten Ende des zweiten horizontalen Balkens 5.2 ist über ein drittes Adapterstück 8.3 ein dritter vertikaler Balken 4.3 befestigt. Dieses dritte Adapterstück 8.3 ist am unteren Ende des dritten vertikalen Balkens 4.3 an einer ersten längsseitigen Fläche des dritten vertikalen Balkens 4.3 und an einer vertikal ausgerichteten, ersten längsseitigen Fläche des zweiten horizontalen Balkens 5.2 angebracht, wobei die erste längsseitige Fläche des zweiten horizontalen Balkens 5.2 in Richtung des ersten Endes des ersten horizontalen Balkens 5.1 zeigt und der zweiten längsseitigen Fläche des zweiten horizontalen Balkens 5.2 gegenüberliegt. Die durch das dritte Adapterstück 8.3 verbundenen Flächen des zweiten horizontalen Balkens 5.2 und des dritten vertikalen Balkens 4.3 stehen in einer horizontalen Ebene in einem Winkel von 45° zueinander, welcher zum zweiten Ende des zweiten horizontalen Balkens 5.2 hin geöffnet ist. Dadurch zeigt eine zweite längsseitige Fläche des ersten vertikalen Balkens 4.1, welche gegenüber der ersten längsseitigen Fläche des ersten vertikalen Balkens 4.1 liegt, auf eine zweite längsseitige Fläche des dritten vertikalen Balkens 4.3, welche der ersten längsseitigen Fläche des dritten Balkens 4.3 gegenüberliegt.

Auf einer vertikal ausgerichteten, zweiten längsseitigen Fläche des ersten horizontalen Balkens 5.1, welche der ersten längsseitigen Fläche des ersten horizontalen Balkens 5.1 gegenüberliegt, ist am ersten Ende des ersten horizontalen Balkens 5.1 ein vertikal ausgerichtetes, erstes Sockelelement 6.1 befestigt. Das erste Sockelelement 6.1 ist am ersten horizontalen Balken 5.1 gegenüber dem ersten Adapterstück 8.1 befestigt. Der Befestigungspunkt am ersten Sockelelement 6.1 liegt am oberen Ende des ersten Sockelelements 6.1 an einer längsseitigen Fläche. Am unteren Ende des ersten Sockelelements 6.1 befindet sich ein Adapter, mittels welchem das erste Sockelelement 6.1 am Boden verschraubt werden kann. Analog zum ersten Sockelelement 6.1 ist ein zweites Sockelelement 6.2 in identischer Weise an der zweiten längsseitigen Fläche des zweiten horizontalen Balkens 5.2 am zweiten Ende des zweiten horizontalen Balkens 5.2 gegenüber des dritten Adapterstücks 8.3 befestigt.

Der Stütze 7 besitzt wie die beiden Sockelelemente 6.1, 6.2 eine tragende Funktion. Nach unten hin überragt sie die beiden horizontalen Balken 5.1, 5.2 in gleichem Masse wie dies die beiden Sockelelemente 6.1, 6.2 tun. Am unteren Ende der Stütze 7 befindet sich analog zu den Sockelelementen 6.1, 6.2 ein Adapter, mittels welchem die Stütze 7 mit dem Boden verschraubt werden kann.

In halber Höhe der drei vertikalen Balken 4.1, 4.2, 4.3 sind analog zum ersten und zweiten horizontalen Balken 5.1, 5.2 ein dritter horizontaler Balken 5.3 und ein vierter horizontaler Balken 5.4 mit den drei vertikalen Balken 4.1, 4.2, 4.3 über drei Adapterstücke 8.4, 8.5, 8.6 verbunden. Diese beiden horizontalen Balken 5.3, 5.4 sind ebenfalls analog zum ersten und zum zweiten horizontalen Balken 5.1, 5.2 miteinander und mit der Stütze 7 verbunden.

An den oberen Enden der drei vertikalen Balken 4.1, 4.2, 4.3 sind ebenfalls analog zum ersten und zweiten horizontalen Balken 5.1, 5.2 ein fünfter horizontaler Balken 5.4 und ein sechster horizontaler Balken 5.6 mit den drei vertikalen Balken 4.1, 4.2, 4.3 über drei Adapterstücke 8.7, 8.8, 8.9 verbunden. Diese beiden horizontalen Balken 5.5, 5.6 sind ebenfalls analog zum ersten und zum zweiten horizontalen Balken 5.1, 5.2 miteinander und mit der Stütze 7 verbunden. Das obere Ende der Stütze 7 befindet sich dabei auf derselben Höhe wie die obere längsseitige Fläche des fünften horizontalen Balkens 5.5.

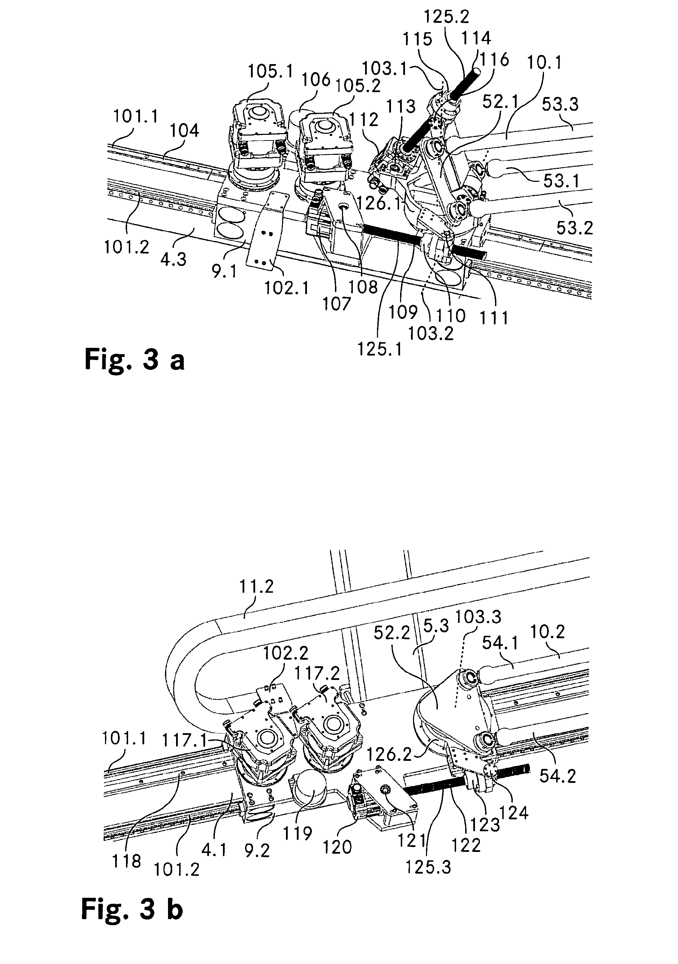

Die bewegbare Vorrichtung 2 ist an den drei vertikalen Balken 4.1, 4.2, 4.3 vertikal bewegbar gelagert. Dazu befinden sich je zwei Schienen 101.1, 101.2 (siehe Figur 3a und Figur 3b) an einer zweiten längsseitigen Fläche des zweiten vertikalen Balkens 4.2, welche der ersten längsseitigen Fläche des zweiten vertikalen Balkens 4.2 gegenüberliegt, an der zweiten längsseitigen Fläche des ersten vertikalen Balkens 4.1, sowie an der zweiten längsseitigen Fläche des dritten vertikalen Balkens 4.3. Auf den beiden Schienen 101.1, 101.2 des ersten vertikalen Balkens 4.1 läuft ein zweiter Schlitten 9.2, auf den beiden Schienen 101.1, 101.2 des zweiten vertikalen Balkens 4.2 ein dritter Schlitten 9.3 und auf den beiden Schienen 101.1, 101.2 des dritten vertikalen Balkens 4.3 ein erster Schlitten 9.1. Am ersten Schlitten 9.1 ist ein erster Arm 10.1, am zweiten Schlitten 9.2 ein zweiter Arm 10.2 und am dritten Schlitten 9.3 ein dritter Arm 10.3 montiert. Diese drei Arme 10.1, 10.2, 10.3 sind jeweils mit dem, dem entsprechenden Schlitten 9.1, 9.2, 9.3 entgegen gesetzten Ende mit dem Endeffektor 3 verbunden. Die Energieversorgung sowie die Versorgung mit Kontrollbefehlen der drei Schlitten 9.1, 9.2, 9.3 wird durch Energieketten 11.1, 11.2, 11.3 geführt. Dazu ist eine erste Energiekette 11.1 an ihrem einen Ende an einer Mitte des dritten vertikalen Balkens 4.3 befestigt und mit ihrem anderen Ende an einer ersten Befestigungsvorrichtung 102.1 am Schlitten 9.1 (siehe Figur 3a) befestigt, eine zweite Energiekette 11.2 an ihrem einen Ende an einer Mitte des ersten vertikalen Balkens 4.1 befestigt und mit ihrem anderen Ende an einer zweiten Befestigungsvorrichtung 102.2 am Schlitten 9.2 (siehe Figur 3b) befestigt und eine dritte Energiekette 11.3 an ihrem einen Ende an einer Mitte des zweiten vertikalen Balkens 4.2 befestigt und mit ihrem anderen Ende an einer dritten Befestigungsvorrichtung (nicht gezeigt) am Schlitten 9.3 befestigt.

Figur 2 zeigt eine Ansicht des Industrieroboters von unten. Zusätzlich zu den in der Beschreibung zur Figur 1 bereits beschriebenen Elementen ist hier auch die Adapterfläche 51 des Endeffektors 3 sichtbar. An dieser Adapterfläche 51 können ein oder mehrere Objekte, beispielsweise auch Werkzeuge, angebracht werden und im Raum bewegt und orientiert werden.

Am ersten Schlitten 9.1 ist wie erwähnt der erste Arm 10.1 angebracht. Dieser erste Arm 10.1 umfasst ein erstes Verbindungsstück 52.1 sowie drei erste Verbindungen 53.1, 53.2, 53.3. Das erste Verbindungsstück 52.1 ist plattenförmig und besitzt eine dreieckige Form mit abgerundeten Ecken. Es ist um eine erste Drehachse 103.1 (siehe Figur 3a) schwenkbar, welche senkrecht zu einer Rückenfläche des ersten Schlittens 9.1 steht sowie eine kürzeste Verbindung zwischen dem dritten und dem ersten vertikalen Balken 4.3, 4.1 darstellt. Des Weiteren ist das erste Verbindungsstück 52.1 um eine zweite Drehachse 103.2 (siehe Figur 3a) schwenkbar, welche rechtwinklig zur ersten Drehachse 103.1 steht und zusammen mit dem ersten Verbindungsstück 52.1 um die erste Drehachse 103.1 schwenkbar ist. Diese zweite Drehachse 103.2 verläuft parallel zu einer Seitenkante des ersten Verbindungsstücks 52.1.

Eine Ebene, welche durch das erste Verbindungsstück 52.1 gebildet wird, ist derart zum dritten vertikalen Balken 4.3 geneigt, dass sie von den drei vertikalen Balken 4.1, 4.2, 4.3 durchstossen wird. Eine dem ersten Schlitten 9.1 abgewandte Hauptfläche des ersten Verbindungsstücks 52.1 weist in den Raum zwischen den drei vertikalen Balken 4.1, 4.2, 4.3. Auf dieser Hauptfläche des ersten Verbindungsstücks 52.1 sind in den drei Ecken die drei ersten Verbindungen 53.1, 53.2, 53.3 schwenkbar gelagert. Die drei ersten Verbindungen 53.1, 53.2, 53.3 sind stangenförmig und gleich lang. Ihre Lagerung am ersten Verbindungsstück 52.1 befindet sich an einem ihrer beiden Enden. An ihren anderen Enden sind die ersten Verbindungen 53.1, 53.2, 53.3 auf der der Adapterfläche 51 abgewandten Seite des Endeffektors 3 schwenkbar gelagert. Die Distanzen zwischen den drei Verbindungspunkten der ersten Verbindungen 53.1, 53.2, 53.3 mit dem ersten Verbindungsstück 52.1 sind gleich gross wie die Distanzen zwischen den drei Verbindungspunkten der ersten Verbindungen 53.1, 53.2, 53.3 mit dem Endeffektor 3.

Am zweiten Schlitten 9.2 ist der zweite Arm 10.2 angebracht. Dieser zweite Arm 10.2 umfasst ein zweites Verbindungsstück 52.2 sowie zwei zweite Verbindungen 54.1, 54.2. Das zweite Verbindungsstück 52.2 ist plattenförmig und besitzt eine dreieckige Form mit abgerundeten Ecken. Es ist um eine dritte Drehachse 103.3 (siehe Figur 3b) schwenkbar, welche senkrecht zu einer Rückenfläche des zweiten Schlittens 9.2 steht sowie eine kürzeste Verbindung zwischen dem ersten und dem dritten vertikalen Balken 4.1, 4.3 darstellt. Eine Ebene, welche durch das zweite Verbindungsstück 52.2 gebildet wird, ist derart zum ersten vertikalen Balken 4.1 geneigt, dass sie von den drei vertikalen Balken 4.1, 4.2, 4.3 durchstossen wird. Eine dem zweiten Schlitten 9.2 abgewandte Hauptfläche des zweiten Verbindungsstücks 52.2 weist in den Raum zwischen den drei vertikalen Balken 4.1, 4.2, 4.3. Auf dieser Hauptfläche des zweiten Verbindungsstücks 52.2 sind in denjenigen zwei der drei Ecken, welche der dem zweiten Schlitten 9.2 abgewandten Hauptfläche des zweiten Verbindungsstücks 52.2 am nächsten sind, die zwei zweiten Verbindungen 54.1, 54.2 schwenkbar gelagert. Die Verbindungslinie zwischen den beiden Verbindungspunkten der zwei zweiten Verbindungen 54.1, 54.2 mit dem zweiten Verbindungsstück 52.2 liegt rechtwinklig zur dritten Drehachse 103.3. Die zwei zweiten Verbindungen 54.1, 54.2 sind stangenförmig und untereinander gleich lang sowie auch gleich lang wie die drei ersten Verbindungen 53.1, 53.2, 53.3. Ihre Lagerung am zweiten Verbindungsstück 52.2 befindet sich an einem ihrer beiden Enden. An ihren anderen Enden sind die zweiten Verbindungen 54.1, 54.2 auf der, der Adapterfläche 51 abgewandten Seite des Endeffektors 3 schwenkbar gelagert. Die Distanzen zwischen den beiden Verbindungspunkten der zweiten Verbindungen 54.1, 54.2 mit dem zweiten Verbindungsstück 52.2 sind gleich gross wie die Distanzen zwischen den beiden Verbindungspunkten der zweiten Verbindungen 54.1, 54.2 mit dem Endeffektor 3.

Am dritten Schlitten 9.3 ist der dritte Arm 10.3 angebracht (siehe Figur 2). Dieser dritte Arm 10.3 umfasst ein drittes Verbindungsstück 52.3 sowie eine dritte Verbindung 55. Das dritte Verbindungsstück 52.3 ist plattenförmig und besitzt eine dreieckige Form mit abgerundeten Ecken. Eine Ebene, welche durch das dritte Verbindungsstück 52.3 gebildet wird, ist derart zum ersten vertikalen Balken 4.2 geneigt, dass sie von den drei vertikalen Balken 4.1, 4.2, 4.3 durchstossen wird. Eine dem dritten Schlitten 9.3 abgewandte Hauptfläche des dritten Verbindungsstücks 52.3 zeigt auf eine Linie in einer Mitte zwischen den drei vertikalen Balken 4.1, 4.2, 4.3. Auf dieser Hauptfläche des dritten Verbindungsstücks 52.3 ist in der Mitte die dritte Verbindung 55 schwenkbar gelagert. Die dritte Verbindung 55 ist stangenförmig und gleich lang wie die drei ersten Verbindungen 53.1, 53.2, 53.3 und die zwei zweiten Verbindungen 54.1, 54.2. Ihre Lagerung am dritten Verbindungsstück 52.3 befindet sich an einem ihrer beiden Enden. An ihrem anderen Ende ist die dritte Verbindung 55 auf der der Adapterfläche 51 abgewandten Seite des Endeffektors 3 schwenkbar gelagert.

Figur 3a zeigt eine Detailansicht des ersten Schlittens 9.1, welcher auf den beiden Schienen 101.1, 101.2 am dritten vertikalen Balken 4.3 läuft und welcher mit dem ersten Arm 10.1 verbunden ist.

Die beiden Schienen 101.1, 101.2 besitzen je einen im Wesentlichen rechtwinkligen Querschnitt, wobei die breiteren Seitenflächen parallel zur ersten und zweiten längsseitigen Fläche des dritten vertikalen Balkens 4.3 orientiert sind. Beide Schienen 101.1, 101.2 besitzen auf der von der jeweils anderen Schiene 101.2, 101.1 abgewandten, ersten schmalen Seitenfläche abgefaste Seitenkanten. Auf diesen ersten schmalen Seitenflächen laufen profilierte Laufrollen (nicht sichtbar, da unter dem ersten Schlitten 9.1 versteckt), deren Achsen vertikal zur zweiten längsseitigen Fläche des dritten vertikalen Balkens 4.3 orientiert sind. Aufgrund der abgefasten Seitenkanten der ersten schmalen Seitenflächen der Schienen 101.1, 101.2 und den darauf laufenden profilierten Laufrollen, welche jeweils in Paaren die beiden Schienen 101.1, 101.2 zwischen sich einklemmen, wird der erste Schlitten 9.1 am dritten vertikalen Balken 4.3 gehalten und ist nur entlang dessen zweiten längsseitigen Fläche bewegbar.

An der ersten der beiden Schienen 101.1 befindet sich auf einer zweiten schmalen Seitenfläche, welche der zweiten der beiden Schienen 101.2 zugewandt ist, eine Zahnstange 104. Daran läuft der Antrieb des ersten Schlittens 9.1: Auf dem Rücken des ersten Schlittens 9.1 sind entlang der Längsachse des ersten Schlittens 9.1 an einem ersten Ende zwei Motoren 105.1, 105.2 mit eingebauten Encodern angebracht, deren Achsen senkrecht zum Rücken des ersten Schlittens 9.1 und zur zweiten längsseitigen Fläche des dritten vertikalen Balkens 4.3 orientiert sind. Diese beiden Motoren 105.1, 105.2 treiben über je ein Ritzel die Bewegung des ersten Schlittens 9.1 entlang des dritten vertikalen Balkens 4.3 an, wobei die beiden Ritzel in der Zahnstange 104 laufen. Der Antrieb besteht aus den beiden Motoren 105.1, 105.2, da diese gegeneinander verspannt werden können, wodurch der erste Schlitten 9.1 spielfrei entlang des dritten vertikalen Balkens 4.3 bewegt werden kann. Um die Elemente des Antriebs zu schmieren, befindet sich eine Fettbüchse 106 mit Schmierfett auf der Rückenfläche des ersten Schlittens 9.1 zwischen den beiden Motoren 105.1, 105.2 auf einer Seite, auf welcher sich die Zahnstange 104 unter dem ersten Schlitten 9.1 befindet.

Auf dem Rücken des ersten Schlittens 9.1 ist an einem zweiten Ende in Längsrichtung der erste Arm 10.1 angebracht. Dieser besteht aus einem ersten Aufsatz 126.1, welcher ein im Wesentlichen zylinderförmiges Profil mit geringer Höhe und einem daran angebrachten Arm aufweist. Dieser erste Aufsatz 126.1 ist um die zum Rücken des ersten Schlittens 9.1 senkrechte erste Drehachse 103.1 schwenkbar. Die Schwenkbewegung des ersten Aufsatzes 126.1 wird durch einen ersten Spindelantrieb 125.1 betätigt, welches durch einen ersten Motor 107 angetrieben wird. Dieser erste Motor 107 befindet sich auf einer der Fettbüchse 106 gegenüberliegenden Seite des Rückens des ersten Schlittens 9.1 etwa in einer Mitte der Längsrichtung des ersten Schlittens 9.1 und ist um eine erste Schwenkachse 108 schwenkbar gelagert, welche senkrecht zum Rücken des ersten Schlittens 9.1 liegt. Die Achse des ersten Motors 107 bewegt sich dabei immer in einer Ebene, welche parallel zum Rücken des ersten Schlittens 9.1 liegt. Diese Achse des ersten Motors 107 treibt eine erste Spindel 109 an, welche in einem ersten Gegenstück 110 mit Gewinde läuft. Dieses erste Gegenstück 110 ist um eine zweite Schwenkachse 111, welche senkrecht zum Rücken des ersten Schlittens 9.1 orientiert ist, schwenkbar am Arm des ersten Aufsatzes 126.1 des ersten Arms 10.1 gelagert. Eine Drehbewegung des ersten Motors 107 treibt die erste Spindel 109 an, wodurch das erste Gegenstück 110 mit Gewinde auf der ersten Spindel 109 vor und zurück geschoben wird und der erste Aufsatz 126.1 des ersten Arms 10.1 um die erste Drehachse 103.1 gedreht wird. Die erste Schwenkachse 108 des ersten Motors 107 und die zweite Schwenkachse 111 des ersten Gegenstücks 110 dienen dabei zum Ausgleich der Winkel zwischen den an der Bewegung beteiligten Komponenten.

Auf dem ersten Aufsatz 126.1 des ersten Arms 10.1 ist auf einer Seite eines zweiten Endes des Rückens des ersten Schlittens 9.1, welcher dem ersten Ende des Rückens des ersten Schlittens 9.1 entgegengesetzt ist, das erste Verbindungsstück 52.1 um die zweite Drehachse 103.2 kippbar gelagert. Die zweite Drehachse 103.2 befindet dabei sich in einer Ebene, welche parallel zum Rücken des ersten Schlittens 9.1 liegt. Das erste Verbindungsstück 52.1 ist mit einer Seitenkante parallel zur zweiten Drehachse 103.2 montiert. Die vom ersten Schlitten 9.1 abgewandte Hauptfläche des Verbindungsstücks 52.1 ist vom Mittelpunkt des ersten Schlittens 9.1 weggekippt. Die schwenkbaren Lagerungen von zwei der drei ersten Verbindungen 53.1, 53.2 befinden sich mit dem Drehzentrum auf der zweiten Drehachse 103.2.

Die Kippung des ersten Verbindungsstücks 52.1 wird durch einen zweiten Spindelantrieb 125.2 betätigt, welcher durch einen zweiten Motor 112 angetrieben wird. Dieser zweite Motor 112 ist um eine dritte Schwenkachse 113 gelagert, wobei die dritte Schwenkachse 113 parallel zur zweiten Drehachse 103.2 verläuft. Die Achse des zweiten Motors 112 ist rechtwinklig zur dritten Schwenkachse 113 orientiert und treibt eine zweite Spindel 114 an. Ein zweites Gegenstück 115 mit Gewinde läuft auf dieser zweiten Spindel 114. Dieses ist um eine vierte Schwenkachse 116, welche parallel zur dritten Schwenkachse 113 verläuft, schwenkbar an einem freien Ende des ersten Verbindungsstücks 52.1 gelagert. Das freie Ende des ersten Verbindungsstücks 52.1 befindet sich bei einer Ecke des ersten Verbindungsstücks, welche sich auf einer der zweiten Drehachse 103.2 gegenüberliegenden Seite des ersten Verbindungsstücks 52.1 befindet. Durch den zweiten Motor 112 wird das zweite Gegenstück 115 auf der zweiten Spindel 114 vor und zurück geschoben. Dadurch wird die Kippung des ersten Verbindungsstücks 52.1 um die zweite Drehachse 103.2 gesteuert.

Neben dem ersten Motor 107 ist auf der gleichen Seite des ersten Schlittens 9.1 eine Befestigungsvorrichtung 102.1 angebracht, an welcher die erste Energiekette 11.1 (in Figur 3a nicht gezeigt) zur Energieversorgung des ersten Schlittens 9.1 sowie dessen Versorgung mit Steuerbefehlen angebracht wird.

Figur 3b zeigt eine Detailansicht des zweiten Schlittens 9.2, welcher auf den beiden Schienen 101.1, 101.2 am ersten vertikalen Balken 4.1 läuft und welcher mit dem zweiten Arm 10.2 verbunden ist.

Analog zum ersten Schlitten 9.1 läuft der zweite Schlitten 9.2 auf zwei Schienen 101.1, 101.2 am ersten vertikalen Balken 4.1. Der Antrieb des zweiten Schlittens 9.2 umfasst analog zum Antrieb des ersten Schlittens 9.1 zwei Motoren 117.1, 117.2, welche auf dem Rücken des zweiten Schlittens 9.2 an einem ersten Ende des zweiten Schlittens 9.2 montiert sind und deren Achsen senkrecht zum Rücken des zweiten Schlittens 9.2 stehen. Beide Motoren 117.1, 117.2 treiben je ein Ritzel an, welches auf einer Zahnstange 118 läuft, welche sich auf der zweiten schmalen Seitenfläche der ersten der beiden Schienen 101.1 befindet. Die Bewegung des zweiten Schlittens entlang dem ersten vertikalen Balken 4.1 wird durch Schmierfett aus einer Fettbüchse 119 gefettet, welche auf dem Rücken des zweiten Schlittens 9.2 auf einer Seite, unter welcher sich die Zahnstange 118 befindet, angebracht ist.

Auf dem Rücken des zweiten Schlittens 9.2 ist an einem zweiten Ende in Längsrichtung der zweite Arm 10.2 angebracht. Dieser besteht aus einem zweiten Aufsatz 126.2, welcher ein im Wesentlichen zylinderförmiges Profil mit geringer Höhe und einem daran angebrachten Arm aufweist. Dieser zweite Aufsatz 126.2 ist um die zum Rücken des zweiten Schlittens 9.2 senkrechte dritte Drehachse 103.3 schwenkbar. Die Schwenkbewegung des zweiten Aufsatzes 126.2 wird durch einen dritten Spindelantrieb 125.3 betätigt, welcher durch einen dritten Motor 120 angetrieben wird. Dieser dritte Motor 120 befindet sich auf einer der Fettbüchse 119 gegenüberliegenden Seite des Rückens des zweiten Schlittens 9.2 etwa in einer Mitte der Längsrichtung des zweiten Schlittens 9.2 und ist um eine fünfte Schwenkachse 121 schwenkbar gelagert, welche senkrecht zum Rücken des zweiten Schlittens 9.2 liegt. Die Achse des dritten Motors 120 bewegt sich dabei immer in einer Ebene, welche parallel zum Rücken des zweiten Schlittens 9.2 liegt. Diese Achse des dritten Motors 120 treibt eine dritte Spindel 121 an, welche in einem dritten Gegenstück 122 mit Gewinde läuft. Dieses dritte Gegenstück 122 ist um eine sechste Schwenkachse 123, welche senkrecht zum Rücken des zweiten Schlittens 9.2 orientiert ist, schwenkbar am Arm am zweiten Aufsatz 126.2 des zweiten Arms 10.2 gelagert. Eine Drehbewegung des dritten Motors 120 treibt die dritte Spindel 121 an, wodurch das dritte Gegenstück 122 mit Gewinde auf der dritten Spindel 121 vor und zurück geschoben wird und der zweite Aufsatz 126.2 des zweiten Arms 10.2 um die dritte Drehachse 103.3 gedreht wird. Die fünfte Schwenkachse 121 des dritten Motors 120 und die sechste Schwenkachse 123 des dritten Gegenstücks 122 dienen dabei zum Ausgleich der Winkel zwischen den an der Bewegung beteiligten Komponenten.

Auf dem zweiten Aufsatz 126.2 des zweiten Arms 10.2 ist das zweite Verbindungsstück 52.2 des zweiten Arms 10.2 angebracht. Die dem zweiten Schlitten 9.2 abgewandte Hauptfläche des zweiten Verbindungsstücks 52.2 ist in einen Winkel zum Rücken des zweiten Schlittens 9.2 montiert. Die Orientierung dieser Hauptfläche ist im Wesentlichen weg von einer Mitte des zweiten Schlittens 9.2, wird jedoch mit einer Schwenkbewegung um die dritte Drehachse 103.3 mitgeschwenkt.

Auf einer dem dritten Motor 120 entgegen gesetzten Seite des zweiten Schlittens 9.2 ist eine Befestigungsvorrichtung 102.2 angebracht, an welcher die zweite Energiekette 11.2 zur Energieversorgung des zweiten Schlittens 9.2 sowie dessen Versorgung mit Steuerbefehlen angebracht wird.

Vom dritten Schlitten 9.3 ist keine Detailansicht gegeben, da dieser im Wesentlichen wie der erste und der zweite Schlitten 9.1, 9.2 gebaut ist. Er wird ebenfalls durch zwei Motoren entlang dem zweiten vertikalen Balken 4.2 bewegt. An einem zweiten Ende des dritten Schlittens 9.3, welches einem ersten Ende des dritten Schlittens 9.3 mit den beiden Motoren entgegen gesetzt ist, ist das dritte Verbindungsstück 52.3 des dritten Arms 10.3 am dritten Schlitten 9.3 angebracht. Entgegen der Lagerung des ersten und des zweiten Arms 10.1, 10.2 am ersten, bzw. zweiten Schlitten 10.1, 10.2 ist das dritte Verbindungsstück 52.3 ohne Aufsatz direkt am dritten Schlitten 9.3 befestigt. Die vom dritten Schlitten 9.3 abgewandte Hauptfläche des dritten Verbindungsstücks 52.3 ist dabei sowohl von einer Mitte des dritten Schlittens 9.3 als auch seitwärts vom Rücken des dritten Schlittens 9.3 weggekippt, so dass sie auf eine Mitte zwischen den drei vertikalen Balken 4.1, 4.2, 4.3 zeigt.

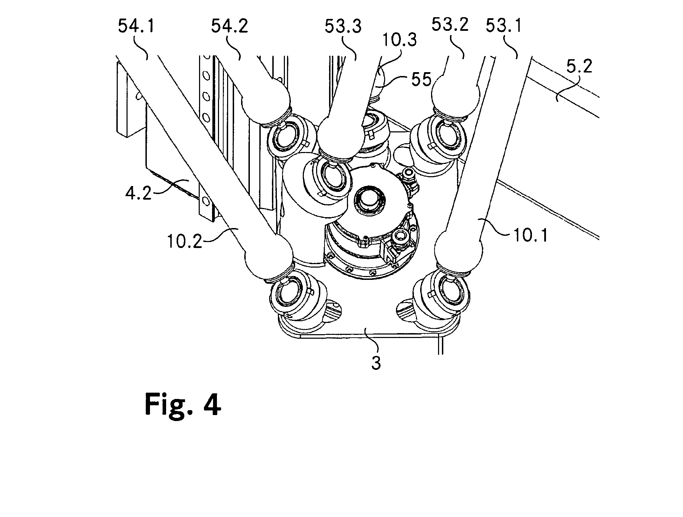

Figur 4 zeigt eine detaillierte Schrägansicht des Endeffektors 3 von derjenigen Seite her gesehen, welche der Adapterfläche 51 des Endeffektors 3 gegenüberliegt und an welcher die Verbindungen 53.1, 53.2, 53.3, 54.1, 54.2, 55 der drei Arme 10.1, 10.2, 10.3 mit dem Endeffektor 3 verbunden sind. Von dieser Seite her senkrecht zu einer Ebene der Adapterfläche 51 gesehen, hat der Grundriss des Endeffektors 3 eine quadratische Form mit abgerundeten Ecken. Die Seitenlängen dieses Grundrisses sind gleich lang wie die Seitenlängen der drei Verbindungsstücke 52.1, 52.2, 52.3. Auf einer ersten Seite des Grundrisses sind in den beiden Ecken des Grundrisses die beiden zweiten Verbindungen 54.1, 54.2 des zweiten Arms 10.2 schwenkbar am Endeffektor 3 gelagert. Auf einer zweiten Seite des Grundrisses, welche der ersten Seite des Grundrisses gegenüberliegt, sind in den beiden Ecken des Grundrisses die beiden der drei ersten Verbindungen 53.1, 53.2 des ersten Armes 10.1, deren Verbindungspunkte mit dem ersten Verbindungsstück 52.1 auf der zweiten Drehachse 103.2 liegen, schwenkbar gelagert. Die dritte der ersten Verbindungen 53.3 ist auf der ersten Seite des Grundrisses in einer Mitte zwischen den Lagerungen der beiden zweiten Verbindungen 54.1, 54.2 schwenkbar gelagert. Diese Lagerung der dritten der drei ersten Verbindungen 53.3 ist im Vergleich zu den anderen Lagerungen weiter weg von der Adapterfläche 51 platziert. Dadurch liegen die Lagerungen der drei ersten Verbindungen 53.1, 53.2, 53.3 des ersten Arms 10.1 in einer Ebene, welche eine durch die Adapterfläche 51 definierte Ebene schneidet.

Auf einer dritten Seite des Grundrisses, welche zwischen der ersten und der zweiten Seite des Grundrisses liegt, ist in der mit der ersten Seite des Grundrisses gemeinsamen Ecke dieser dritten Seite eine der zweiten Verbindungen 54.2 des zweiten Arms 10.2 schwenkbar gelagert. In der der zweiten und dritten Seite des Grundrisses gemeinsamen Ecke ist eine der ersten Verbindungen 53.2 des ersten Arms 10.1 schwenkbar gelagert. Dazwischen ist in einer Mitte der dritten Seite des Grundrisses die dritte Verbindung 55 des dritten Arms schwenkbar gelagert. Alle diese Lagerungen der zweiten und dritten Verbindungen 54.1, 54.2, 55 des zweiten und des dritten Arms 10.2, 10.3 am Endeffektor 3 sowie die Lagerungen am Endeffektor 3 der beiden Verbindungen 53.1, 53.2 des ersten Arms 10.1, deren Verbindungspunkte mit dem ersten Verbindungsstück 52.1 auf der zweiten Drehachse 103.2 liegen, liegen in einer Parallelebene zur durch die Adapterfläche 51 definierten Ebene.

Der Endeffektor 3 wird hauptsächlich durch geeignetes Positionieren des ersten Schlittens 9.1 auf dem dritten vertikalen Balken 4.3, des zweiten Schlittens 9.2 auf dem ersten vertikalen Balken 4.1 und des dritten Schlittens 9.3 auf dem zweiten vertikalen Balken 4.2 im Raum positioniert. Die Orientierung des Endeffektors 3 wird durch geeignetes Drehen des ersten Verbindungsstücks 52.1 um die erste und die zweite Drehachse 103.1 103.2 sowie durch geeignetes Drehen des zweiten Verbindungsstücks 52.2 um die dritte Drehachse 103.3 erreicht. Je nach Drehung ändert sich auch die Position des Endeffektors 3 im Raum leicht und muss durch geeignetes Nachstellen des ersten, zweiten und/oder dritten Schlittens 9.1, 9.2, 9.3 korrigiert werden.

Aufgrund der Konstruktionsweise des Industrieroboters ist die Orientierung des Endeffektors 3 einfach zu steuern: Eine Drehung des ersten Verbindungsstücks 52.1 um die zweite Drehachse 103.2 bewirkt eine Kippung des Endeffektors 3 seitwärts in einer ersten Richtung. Eine synchrone, gleichseitige Drehung des ersten Verbindungsstücks 52.1 um die erste Drehachse 103.1 und des zweiten Verbindungsstücks 52.2 um die dritte Drehachse 103.3 bewirkt eine Kippung des Endeffektor 3 seitwärts in eine zweite Richtung, welche senkrecht auf die erste Richtung steht. Dadurch kann der Endeffektor 3 in drei räumlichen sowie zwei rotativen Freiheitsgraden bewegt werden.

Wird der dritte rotative Freiheitsgrad des Endeffektors 3 ebenfalls benötigt, werden das erste und das zweite Verbindungsstück 52.1, 52.2 nicht synchron gleichseitig um die erste bzw. dritte Drehachse 103.1, 103.3 gedreht. Dadurch wird der Endeffektor 3 sowohl in der zweiten Richtung seitwärts gekippt als auch in einer dritten Richtung gedreht. Diese dritte Richtung steht sowohl senkrecht auf die erste Richtung als auch senkrecht auf die dritte Richtung und ist parallel zu einer Normalen der Adapterfläche 51 des Endeffektors 3. Um die Bewegbarkeit des Endeffektors 3 optimal zu ermöglichen, bestehen die drei ersten Verbindungen 53.1, 53.2, 53.3, die zwei zweiten Verbindungen 54.1, 54.2, sowie die dritte Verbindung 55 aus Rohrstücken, welche jeweils an beiden Enden über Kugelköpfe verfügen. Diese Kugelköpfe sind schwenkbar in Gegenstücken am ersten, zweiten und dritten Verbindungsstück 52.1,52.2, 52.3 bzw. am Endeffektor 3 gelagert. Um über lange Zeit eine störungsfreie, gleichmässig gut laufende, schwenkbare Lagerung der Verbindungen 53.1, 53.2, 53.3, 54.1, 54.2, 55 zu gewährleisten, ist bei jeder Lagerung ein rohrförmiges Gummistück zwischen das Rohrstück der entsprechenden Verbindung 53.1, 53.2, 53.3, 54.1, 54.2, 55 und dem entsprechenden Gegenstück angebracht. Dieses Gummistück verdeckt einen Bereich zwischen dem Rohrstück der Verbindung und einer Aussenseite des Gegenstücks und hindert dadurch Staub und andere Arten von Schmutz daran, zwischen Kugelkopf und Gegenstück einzudringen und dadurch die Lagerung zu beschädigen.

Die Erfindung ist nicht auf das dargestellte Ausführungsbeispiel beschränkt. Abhängig von den konkreten Anforderungen kann beispielsweise die Trägervorrichtung 1 anders ausgebildet sein. So können beispielsweise je nach Platzvorgaben einer oder mehrere der drei vertikalen Balken, an welchen die drei Schlitten auf Schienen laufen, direkt an einer Wand, am Boden oder an einer Decke befestigt sein. Ausserdem müssen die als vertikale Balken bezeichneten Balken keineswegs vertikal ausgerichtet sein. Je nach Bedarf können diese Balken irgendeine Orientierung im Raum haben. Zudem können sie auch unterschiedliche Längen haben.

Es ist ausserdem nicht vorgeschrieben, dass der erste Arm genau drei erste Verbindungen und der zweite Arm genau zwei zweite Verbindungen umfassen muss. Die einzige Vorgabe ist, dass die drei Arme zusammen über eine Mindestanzahl von sechs Verbindungen verfügen müssen. Vorteilhaft ist es dabei, wenn der erste Arm über mindestens drei erste Verbindungen verfügt und der zweite Arm über mindestens zwei zweite Verbindungen verfügt. Dabei sollten sowohl die Verbindungspunkte der ersten Verbindungen mit dem ersten Verbindungsstück als auch die Verbindungspunkte der ersten Verbindungen mit dem Endeffektor in einer Ebene und nicht nur auf einer Linie liegen. Ausserdem sollten sowohl die Verbindungspunkte der zweiten Verbindungen mit dem zweiten Verbindungsstück als auch die Verbindungspunkte der zweiten Verbindungen mit dem Endeffektor auf einer Linie liegen.

Es ist nicht vorgegeben, dass alle drei Arme gleich lang sein müssen. So kann beispielsweise der erste Arm kürzer oder länger als die anderen beiden Arme sein. Dasselbe gilt auch für den zweiten und den dritten Arm. Zudem können bei einem Arm, welcher mehr als eine Verbindung aufweist, die einzelnen Verbindungen unterschiedlich lang sein. Zudem können die Distanzen zwischen den Verbindungspunkten der Verbindungen eines Arms mit dem entsprechenden Verbindungsstück und die Distanzen zwischen den Verbindungspunkten dieser Verbindungen mit dem Endeffektor unterschiedlich sein.

Es ist auch eine Ausführungsform denkbar, bei welcher die drei Arme nicht auf drei Schlitten entlang drei Balken bewegbar sind, sondern jeweils am Endeffektor entgegen gesetzten Ende schwenkbar, aber sonst fest gelagert sind. In dieser Ausführungsform müssen die Arme längenverstellbar ausgeführt sein. Dabei kann eine Variante gewählt werden, bei der nicht alle Verbindungen eines Arms individuell längenverstellbar sind, sondern bei welcher die Arme nur als Ganzes längenverstellbar sind. Es kann aber auch eine Variante gewählt werden, bei welcher alle Verbindungen eines Arms individuell längenverstellbar sind.

Zusammenfassend ist festzustellen, dass durch die Erfindung ein Industrieroboter geschaffen wird, welcher bei leichter Bauweise eine sehr präzise, starre und vibrationsresistente Positionierung und Orientierung von einem oder mehreren Objekten, insbesondere Werkzeugen, im Raum ermöglicht.

## Patentansprüche

1. Industrieroboter zur Bewegung von einem oder mehreren Objekten im Raum, umfassend einen Endeffektor (3) zum Halten des einen oder der mehreren Objekte, wobei der Endeffektor (3)
a) mit einem ersten Arm (10.1) verbunden ist, welcher mindestens drei Verbindungen (53.1, 53.2, 53.3) aufweist, welche je an einem ersten Verbindungspunkt mit dem Endeffektor (3) verbunden sind und je an einem zweiten Verbindungspunkt mit einem ersten Verbindungsstück (52.1) verbunden sind,
b) mit einem zweiten Arm (10.2) verbunden ist, welcher mindestens zwei Verbindungen (54.1, 54.2) aufweist, welche je an einem ersten Verbindungspunkt mit dem Endeffektor (3) verbunden sind und je an einem zweiten Verbindungspunkt mit einem zweiten Verbindungsstück (52.2) verbunden sind und
c) mit einem dritten Arm (10.3) verbunden ist, welcher eine Verbindung (55) aufweist, welche an einem Verbindungspunkt mit dem Endeffektor (3) verbunden ist und an einem zweiten Verbindungspunkt mit einem dritten Verbindungsstück (52.3) verbunden ist,
wobei die Verbindungen (53.1, 53.2, 53.3, 54.1, 54.2, 55) schwenkbar an den ersten und zweiten Verbindungspunkten gelagert sind, **dadurch gekennzeichnet, dass** das erste Verbindungsstück (52.1) um mindestens eine erste Drehachse (103.1) und eine zweite Drehachse (103.2) drehbar ist und dass das zweite Verbindungsstück (52.2) um mindestens eine dritte Drehachse (103.3) drehbar ist.

2. Industrieroboter nach Anspruch 1, **dadurch gekennzeichnet, dass** die erste Drehachse (103.1) parallel zur dritten Drehachse (103.3) liegt.

3. Industrieroboter nach einem der Ansprüche 1 oder 2, **dadurch gekennzeichnet, dass** die erste Drehachse (103.1) senkrecht zur zweiten Drehachse (103.2) steht.

4. Industrieroboter nach einem der Ansprüche 1 bis 3, **dadurch gekennzeichnet, dass** er zur Drehung des ersten Verbindungsstücks (52.1) um die erste Drehachse (103.1), zur Drehung des ersten Verbindungsstücks (52.1) um die zweite Drehachse (103.2) und zur Drehung des zweiten Verbindungsstücks (52.2) um die dritte Drehachse (103.3) je einen Spindelantrieb (125.1, 125.2, 125.3) umfasst.

5. Industrieroboter nach einem der Ansprüche 1 bis 4, **dadurch gekennzeichnet, dass** die zweiten Verbindungspunkte von mindestens zwei der mindestens drei Verbindungen (53.1, 53.2, 53.3) des ersten Arms (10.1) auf der zweiten Drehachse (103.2) liegen.

6. Industrieroboter nach Anspruch 5, **dadurch gekennzeichnet, dass** die Distanz zwischen den ersten Verbindungspunkten der mindestens zwei Verbindungen (53.1, 53.2) des ersten Arms (10.1), deren zweite Verbindungspunkte auf der zweiten Drehachse (103.2) liegen, gleich gross ist wie die Distanz zwischen den ersten Verbindungspunkten der Verbindungen (54.1, 54.2) des zweiten Arms (10.2).

7. Industrieroboter nach einem der Ansprüche 5 oder 6, **dadurch gekennzeichnet, dass** die Distanz zwischen den zweiten Verbindungspunkten der mindestens zwei Verbindungen (53.1, 53.2) des ersten Arms (10.1), deren zweite Verbindungspunkte auf der zweiten Drehachse (103.2) liegen, gleich gross ist wie die Distanz zwischen den zweiten Verbindungspunkten der mindestens zwei Verbindungen (54.1, 54.2) des zweiten Arms (10.2).

8. Industrieroboter nach einem der Ansprüche 1 bis 7, **dadurch gekennzeichnet, dass** das erste Verbindungsstück (52.1) auf einer ersten Wegstrecke bewegbar ist, dass das zweite Verbindungsstück (52.2) auf einer zweiten Wegstrecke bewegbar ist und dass das dritte Verbindungsstück (52.3) auf einer dritten Wegstrecke bewegbar ist.

9. Industrieroboter nach Anspruch 8, **dadurch gekennzeichnet, dass** die erste Wegstrecke, die zweite Wegstrecke und die dritte Wegstrecke Geraden sind.

10. Industrieroboter nach einem der Ansprüche 8 oder 9, **dadurch gekennzeichnet, dass** die erste Wegstrecke, die zweite Wegstrecke und die dritte Wegstrecke parallel zueinander liegen.

11. Industrieroboter nach einem der Ansprüche 1 bis 10, **dadurch gekennzeichnet, dass** die erste Drehachse (103.1) senkrecht zur ersten Wegstrecke steht.

12. Industrieroboter nach einem der Ansprüche 1 bis 11, **dadurch gekennzeichnet, dass** die dritte Drehachse (103.3) senkrecht zur zweiten Wegstrecke steht.

13. Verfahren zur Steuerung eines Industrieroboters nach einem der Ansprüche 1 bis 12, **dadurch gekennzeichnet, dass** zur Ausrichtung des Endeffektors (3) das erste Verbindungsstück (52.1) um mindestens die erste Drehachse (103.1) und die zweite Drehachse (103.2) gedreht wird und dass das zweite Verbindungsstück (52.2) um mindestens die dritte Drehachse (103.3) gedreht wird.

14. Verfahren nach Anspruch 12, **dadurch gekennzeichnet, dass** der Endeffektor (3) durch Drehen des ersten Verbindungsstücks (52.1) um die zweite Drehachse (103.2) seitwärts in einer ersten Richtung gekippt wird.

15. Verfahren nach einem der Ansprüche 13 oder 14, **dadurch gekennzeichnet, dass** der Endeffektor (3) durch synchron gleichseitiges Drehen des ersten Verbindungsstücks (52.1) um die erste Drehachse (103.1) und des zweiten Verbindungsstücks (52.2) um die dritte Drehachse (103.3) in einer zweiten Richtung seitwärts gekippt wird.

16. Verfahren nach einem der Ansprüche 13 bis 15, **dadurch gekennzeichnet, dass** die erste und die zweite Richtung unterschiedlich sind.

17. Verfahren nach einem der Ansprüche 13 bis 16, **dadurch gekennzeichnet, dass** der Endeffektor (3) durch nicht synchron gleichseitiges Drehen des ersten Verbindungsstücks (52.1) um die erste Drehachse (103.1) und des zweiten Verbindungsstücks (52.2) um die dritte Drehachse (103.3) sowohl in der zweiten Richtung seitwärts gekippt als auch in einer dritten Richtung gedreht wird, wobei es sich bei der dritten Richtung um eine Normale zu einer Oberfläche des Endeffektors (3) handelt.

18. Verfahren nach einem der Ansprüche 13 bis 17, **dadurch gekennzeichnet, dass** der Endeffektor (3) durch Verschieben des ersten Verbindungsstücks (52.1) entlang der ersten Wegstrecke, des zweiten Verbindungsstücks (52.2) entlang der zweiten Wegstrecke und des dritten Verbindungsstücks (52.3) entlang der dritten Wegstrecke im Raum positioniert wird.
